Europäisches Patentamt

European Patent Office

Office européen des brevets

(11) Numéro de publication: **0 065 429**
**A1**

## (12) DEMANDE DE BREVET EUROPEEN

(21) Numéro de dépôt: **82400637.3**

(22) Date de dépôt: **06.04.82**

(51) Int. Cl.³: **G 01 B 9/02**, G 01 D 5/38

(30) Priorité: **16.04.81 FR 8107708**

(43) Date de publication de la demande: **24.11.82**
**Bulletin 82/47**

(84) Etats contractants désignés: **CH DE GB IT LI NL**

(71) Demandeur: **EUROMASK, 4, rue de Presbourg, F-75116 Paris (FR)**

(72) Inventeur: **Tigreat, Paul, 19, Allée des Mitaillères, F-38240 Meylan (FR)**
Inventeur: **Berger, Laurent, 31, Avenue de la Plaine Fleurie, F-38240 Meylan (FR)**

(74) Mandataire: **Fort, Jacques et al, CABINET PLASSERAUD 84, rue d'Amsterdam, F-75009 Paris (FR)**

(54) Procédé et dispositif de mesure optique de déplacement et application aux photorépéteurs sur tranche.

(57) Pour mesurer le déplacement d'un objet, on fait diffracter un faisceau de lumière monochromatique sur un réseau (10) porté par l'objet, on fait interférer les deux faisceaux diffractés (12, 13) de même ordre et on compte les extrema d'intensité de lumière au cours du déplacement.

## Procédé et dispositif de mesure optique de déplacement et application aux photorépéteurs sur tranche

La présente invention concerne la mesure optique de déplacements d'un objet et, plus particulièrement, un procédé et un dispositif permettant d'arriver à la précision élevée qui est nécessaire pour de nombreuses applications de métrologie. L'invention trouve une application particulièrement importante, bien que non exclusive, dans le domaine de la fabrication des circuits intégrés au moyen de photorépéteurs sur tranche (step and repeat en terminologie anglo-saxonne) qui permettent de reproduire à intervalle régulier l'image d'un circuit sur une tranche de silicium par avance pas à pas, ce qui exige une mesure de l'avance avec une grande précision.

On connaît déjà divers procédés optiques de métrologie. L'un des plus utilisés est l'interférométrie en lumière cohérente, dont on trouvera notamment une description dans l'article de G. PIRCHER et al, Revue Technique THOMSON-CFS, volume 4, N° 4, décembre 1972, pp. 685-715. Il existe déjà de nombreux appareils commerciaux mettant en oeuvre ce procédé, comportant un laser à émission continue de 1 à quelques milliwatts, typiquement un laser hélium-néon ou un laser à l'argon. Ces appareils ont presque tous le même schéma optique fondamental. Un pinceau de lumière cohérente provenant d'un laser est scindé par un séparateur en un pinceau de référence et un pinceau de mesure. Le pinceau de mesure est renvoyé par un réflecteur porté par l'objet dont le déplacement est à mesurer et vient interférer avec le pinceau de lumière de référence. Une électronique associée permet de compter les franges d'interférence et d'en déduire le déplacement.

Les appareils de mesure par interférométrie à laser ont un certain nombre d'inconvénients. Leur sensibilité à la température, à la pression atmosphérique et au degré hygrométrique oblige à prévoir des moyens de stabilisation ou de compensation. Le laser doit être stabilisé en fréquence dès que la différence entre les chemins optiques parcourus par le pinceau de référence et le pinceau de mesure devient importante car c'est la longueur d'onde du laser qui sert d'étalon de référence et elle doit donc être connue avec précision.

L'invention vise à fournir un procédé et un dispositif de mesure par voie optique en lumière cohérente répondant mieux que ceux antérieurement connus aux exigences de la pratique, notamment en ce que le fonctionnement s'effectue à différence de marche nulle, ce qui élimine l'influence de la température, de la pression et du degré hygrométrique ; l'incrément est sélectionnable et non pas imposé par la longueur d'onde du laser ; le coût est réduit.

Dans ce but, l'invention propose notamment un procédé optique en lumière cohérente de mesure du déplacement d'un objet, caractérisé en ce qu'on fait diffracter un faisceau, avantageusement parallèle, de lumière monochromatique sur un réseau porté par l'objet, en ce qu'on fait interférer deux faisceaux diffractés de même ordre provenant de l'objet et en ce qu'on compte les extrema d'intensité de lumière du spectre d'interférence.

On voit qu'on fonctionne à différence de marche nulle, qu'il est plus nécessaire d'utiliser un laser stabilisé en fréquence et que l'incrément de mesure est constitué par le pas du réseau, que l'utilisateur peut choisir, à condition qu'il reste inférieur à la longueur d'onde de la lumière utilisée en incidence normale. De plus, lorsque le faisceau de lumière est orienté perpendiculairement au réseau, la mise en oeuvre du procédé ne requiert pas une précision élevée de positionnement du réseau le long du faisceau : en effet, la seule contrainte à respecter est que les faisceaux restent colinéaires et tombent sur le détecteur permettant de compter les extrema.

Lorsqu'on souhaite mesurer les déplacements dans deux directions perpendiculaires, et non plus dans une seule, il suffit que le réseau soit à traits croisés : dans ce cas, on pourra faire interférer les ordres (+1, 0) et (-1, 0) d'une part, les ordres (0, +1) et (0, -1) d'autre part. On peut également utiliser, dans le même but, les ordres croisés (+1, +1) et (+1, -1) ainsi que (-1, +1) et (-1, -1). Dans tous les cas, le sens du déplacement pourra être déterminé en polarisant linéairement le faisceau parallèle incident, le plan de polarisation faisant un angle (avantageusement de 45°) avec les traits du réseau. Il suffit alors de séparer les composantes de la polarisation lors de la détection.

L'invention propose également un dispositif permettant de mettre en oeuvre le procédé ci-dessus défini, caractérisé en ce qu'il comprend une source de lumière fournissant un faisceau parallèle de lumière cohérente monochromatique, un réseau porté par l'objet déplaçable perpendiculairement audit faisceau, des moyens placés sur le trajet de deux faisceaux diffractés de même ordre provenant du réseau pour renvoyer les deux faisceaux vers un système de détection et des moyens permettant de compter les extrema d'intensité de la lumière reçue par le système détecteur lors des déplacements du réseau.

L'invention sera mieux comprise à la lecture de la description qui suit de modes particuliers de réalisation, donnés à titre d'exemples non limitatifs. La description se réfère aux dessins qui l'accompagnent, dans lesquels :

- la Figure 1 est un schéma illustrant le principe de base de l'invention, dont la Figure 1a montre un mode d'exécution ;

- la Figure 2 est une vue schématique en élévation montrant les éléments concernés par l'invention d'un photorépéteur sur tranche de silicium ;

- la Figure 3 est une vue de détail à grande échelle, en coupe suivant un plan vertical, montrant le dispositif de mesure du photorépéteur de la Figure 2 ;

- la Figure 4 montre schématiquement, en perspective, une variante d'un dispositif de mesure suivant deux directions.

Avant de décrire de façon complète un dispositif de mise en oeuvre de l'invention, il peut être utile de donner une analyse du procédé et de rappeler les principes qu'il met en oeuvre. Lorsqu'un réseau plan dont les traits sont répartis avec un pas $p$ est éclairé par une onde plane mono-

- 4 -

0065429

chromatique sous une incidence $\alpha$, il diffracte suivant plusieurs directions $\beta_n$ données par la relation :

$$\sin \alpha + \sin \beta_n = n \frac{\lambda}{p} \qquad (1)$$

où $\lambda$ est la longueur d'onde du faisceau incident et $\underline{n}$ représente l'ordre de diffraction. L'amplitude $A_n$ dans l'ordre $\underline{n}$ est fonction de la forme des traits.

Si on se place dans le cas de l'incidence normale ($\alpha=0$), les directions des maxima seront données par

$$\sin \beta_n = n\lambda/p$$

chaque ordre correspondant à deux directions symétriques, qu'on affecte, respectivement, des signes + et -. Le calcul montre qu'un déplacement en translation $x_0$ du réseau suivant une direction perpendiculaire aux traits introduit sur l'amplitude $A_n$ un déphasage $2\pi n \frac{x_0}{p}$.

Dans pratiquement tous les cas, il suffit de s'intéresser à n = 1, les ordres +1 et -1 étant d'ailleurs pratiquement les seuls à subsister lorsque p est suffisamment petit. On obtient alors, pour les traits symétriques +1 et -1, dont les amplitudes $A_{+1}$ et $A_{-1}$ sont égales à une même valeur A, des valeurs qui deviennent :

$$A_{+1} (x_0) = A \exp (j\, 2\pi\, x_0/p)$$
$$A_{-1} (x_0) = A \exp (-j\, 2\pi\, x_0/p)$$

On voit que la translation $x_0$ du réseau parallèlement à lui-même introduit respectivement, sur les amplitudes d'ordre +1 et -1, des déphasages $+ 2\pi x_0/p$ et $- 2\pi x_0/p$. Si on fait interférer les deux faisceaux diffractés, on recueillera une amplitude :

$$A \angle \exp (j\, 2\pi\, x_0/p) + \exp (-j\, 2\pi\, x_0/p) \angle\!\!\!/ = 2 A \cos 2\pi\ x_0/p \qquad (2)$$

L'intensité recueillie sera donc proportionnelle à $\cos^2 2\pi x_0/p$ et on voit que la variation de l'intensité lumineuse en fonction du déplacement sera théoriquement une fonction sinusoïdale de période p/2. Dans la pratique, les imperfections du système optique font qu'on n'obtient pas une variation d'intensité entre zéro et $4 A^2$, mais une variation à période p/2 entre un maximum et un minimum.

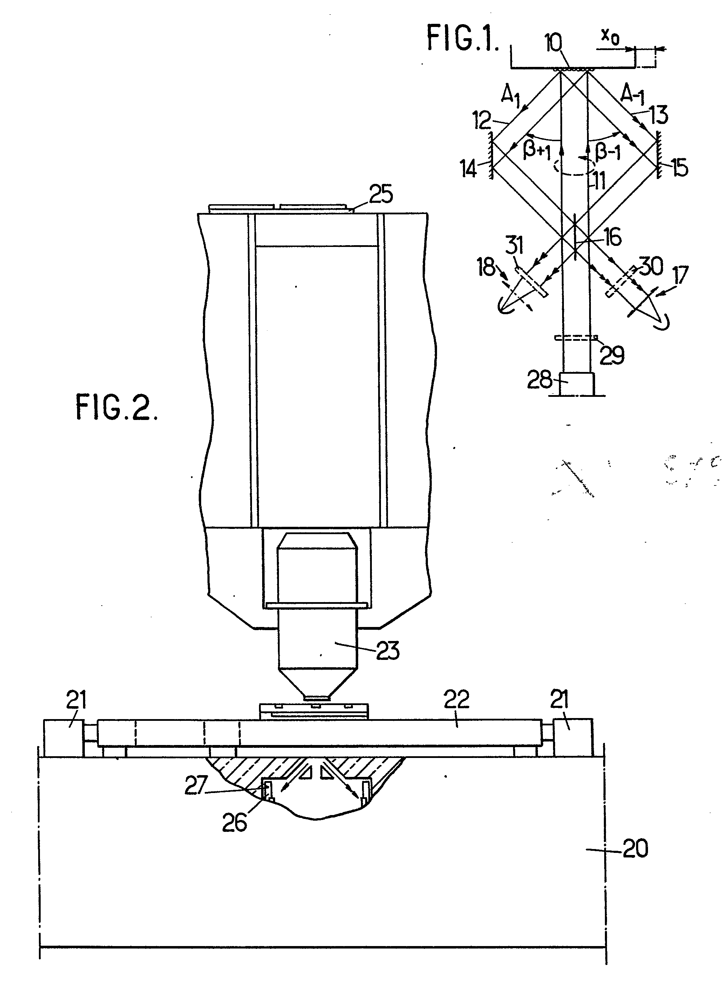

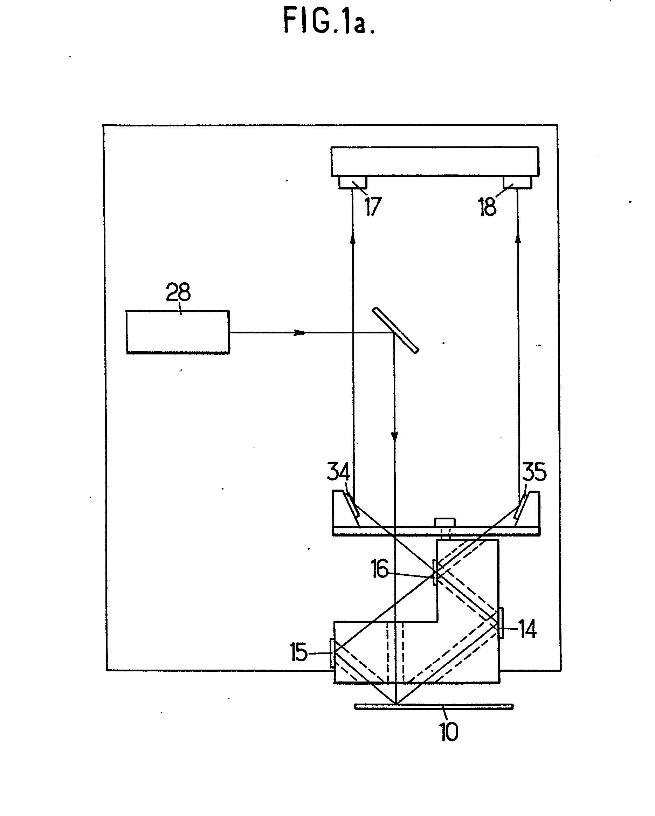

Les moyens nécessaires pour mettre en oeuvre le procédé sont relativement simples et schématisés en figure 1 : ils comportent essentiellement un réseau 10 porté par l'objet dont le déplacement est à mesurer et qui reçoit le faisceau 11 de lumière cohérente parallèle sous incidence normale. Les faisceaux diffusés 12 et 13 d'ordre +1 et -1 sont repris par des miroirs de renvoi 14 et 15 et interfèrent au niveau d'un détecteur 16, constitué par exemple par une lame semi-transparente 16 qui permet de repérer le passage des maxima (ou des minima) à la position de référence que constitue la lame. Un capteur 17 est placé pour recueillir la lumière et fournir un signal électrique : on peut ainsi mesurer les déplacements $x_0$ transversalement aux traits du réseau 10.

On voit que la mise en oeuvre du procédé n'exige que des miroirs de faible dimension, correspondant à celle des faisceaux 12 et 13. On élimine ainsi les miroirs de grande dimension et l'optique de grand diamètre nécessaires dans le cas de l'interférométrie classique, d'où un coût plus faible. La dynamique de mesure n'est limitée que par les dimensions du réseau, dont le coût de fabrication est faible une fois réalisée la matrice.

A titre d'exemple, on peut indiquer qu'un réseau ayant un pas p = 0,8 µm associé à un laser hélium-néon fournissant une longueur d'onde $\lambda$ = 0,63 µm donne un angle de diffraction $\beta_1$ = 52° : l'incrément de comptage est de 0,4 µm. Par interpolation, on peut arriver à une précision de l'ordre de 0,1 µm. Une précision accrue peut être obtenue en utilisant un laser à l'argon pour lequel $\lambda$ = 0,4 µm, permettant d'utiliser un réseau de 0,5 µm.

- 6 -

0065429

Pour déterminer le sens de déplacement, deux procédés peuvent être utilisés. L'un consiste à interposer une lame quart d'onde sur l'un des faisceaux diffractés 12 et 13, comme dans un interféromètre classique. L'autre consiste à polariser circulairement le faisceau 11 envoyé sur le réseau 10, c'est-à-dire à placer une lame quart d'onde à la sortie du laser.

Le montage à utiliser comporte alors, en supplément, les organes montrés en tirets sur la figure 1. La lame quart d'onde 29 est placée à la sortie du laser 28 et les deux détecteurs 17 et 18 sont précédés de deux analyseurs 30 et 31 dont les axes sont décalés de $\pi/4$.

L'effet est alors le suivant. Les faisceaux 12 et 13 qui interfèrent sont polarisés circulairement avec des sens de rotation opposés et les composantes seront

Faisceau 12 :

$$A_{+1x} = A \cos (\omega t + 2\pi x/p)$$

$$A_{+1y} = A \sin (\omega t + 2\pi x/p)$$

Faisceau 13 :

$$A_{-1x} = A \cos (\omega t - 2\pi x/p)$$

$$A_{-1y} = A \sin (\omega t - 2\pi x/p)$$

A la sortie des analyseurs 30 et 31, on obtient deux signaux sinusoïdaux décalés de $\pi/2$ en intensité. A la sortie d'un des analyseurs, l'amplitude et l'intensité détectée seront proportionnelles à $\cos (2\pi x/p)$ et à $2 \cos^2 (2\pi x/p) = 1 + \cos (4\pi x/p)$, respectivement. A la sortie de l'autre analyseur, l'amplitude et l'intensité détectée seront respectivement proportionnelles à $\cos (2\pi x/p + \pi/4)$ et à $1 + \cos (4\pi x/p + \pi/2)$.

L'appareillage pratique de mise en oeuvre de l'invention peut prendre de nombreuses formes. La figure 1a montre un exemple de réalisation dans lequel une plaque métallique 32, fixée au-dessus d'une table mobile en translation portant le réseau 10 et dont les déplacements sont à mesurer, reçoit la source (laser hélium-néon 28) fournissant le faisceau 11. Le capteur, fixé sur une carte de détection, comporte deux photodétecteurs 17 et 18 à préamplificateurs incorporés, sur lesquels sont fixés les polariseurs.

Les miroirs et la lame séparatrice 16 peuvent être portés par un bloc 33 en plusieurs pièces assemblées, percé de trous de passage de la lumière. Le bloc comporte une pièce massive sur laquelle sont collés les miroirs 14 et 15 et la lame 16, et une plaque portant des miroirs 34 et 35 de renvoi vers les détecteurs. Des vis micrométriques (non représentées) permettent un réglage dans la direction $x$, pour faire coïncider le plan de la lame séparatrice 16 avec le plan d'interférence, et des réglages angulaires autour de la direction de la lumière incidente et autour d'un axe perpendiculaire au plan de la figure, pour rendre les faisceaux colinéaires.

Le montage de la Figure 1a est destiné à mesurer les déplacements suivant un seul axe.

Si l'on souhaite mesurer les déplacements suivant deux axes orthogonaux, il convient d'utiliser un réseau 10 croisé et de faire interférer les ordres (+1, 0) et (-1, 0) d'une part, et les ordres (0, +1) et (0, -1) d'autre part.

Si l'orthogonalité des traits est suffisamment bien respectée, le système d'axes de référence peut être incorporé dans un tel répéteur.

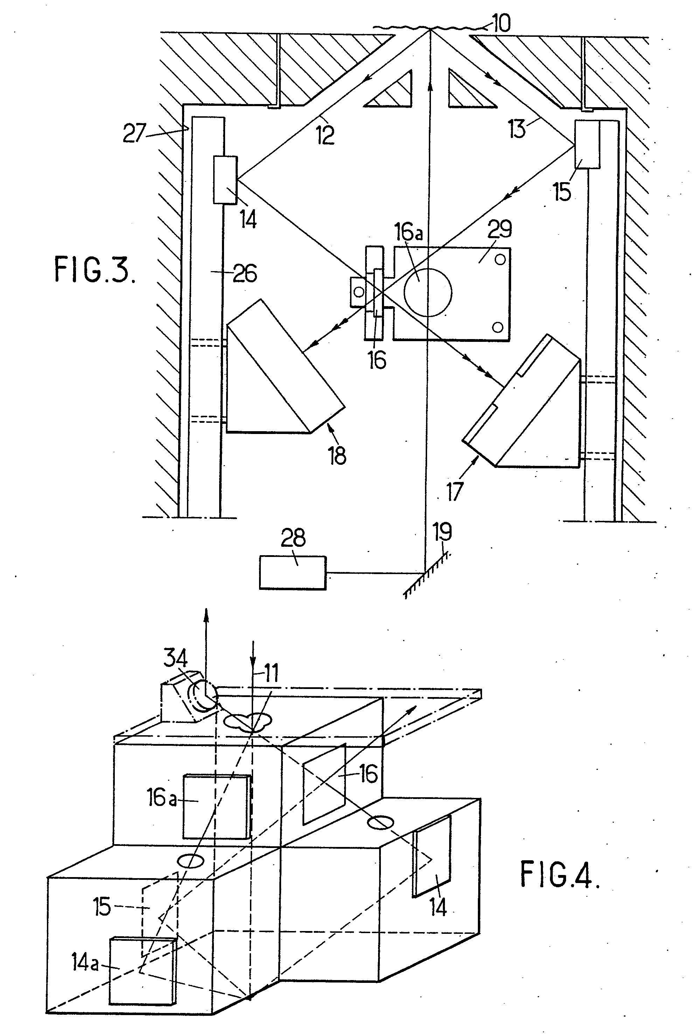

Le répéteur, dont les composants concernés par l'invention sont montrés schématiquement en figure 2, comprend un banc en granite 20 muni de rails. Le rail de guidage peut être en granite, en métal ou en fibre de carbone recouvert de billes de corindon noyées dans la résine. Dans le dernier cas, le rail subit ensuite un plissage optique. Il a l'avantage d'être léger et de présenter une bonne planéité. Sur les rails sont déplaçables en translation des patins tels que 21 dont est munie une table 22 de positionnement en xy. Cette table 22 peut être réalisée soit en métal usiné, soit en matériaux composites de type nid d'abeille collé entre feuilles d'aluminium ou de fibre de carbone par exemple. Cette réalisation a, sur le métal usiné, les avantages de la légèreté, de la rigidité, de la stabilité thermique (coefficient de dilatation de la fibre de carbone plus faible que celui des métaux "INVAR" inclus) et d'un temps de construction par collage très inférieur aux temps d'usinage d'une table en métal. Au-dessus de la table est fixé l'objectif 23, surmonté d'un porte-réticule 25 au-dessus duquel est prévu un illuminateur. Le réseau du dispositif de mesure est fixé sous la table

0065429

22 tandis que les autres éléments sont portés par un tube 26 insérable dans un trou ménagé dans la table.

Le dispositif, destiné à permettre la mesure des déplacements suivant deux directions perpendiculaires, a la constitution montrée en Figure 3, où les organes correspondant à ceux de la Figure 1 portent le même numéro de référence. Ce dispositif comporte un réseau 10 muni de deux jeux de traits perpendiculaires. Ce réseau a un pas qui doit être supérieur à la longueur d'onde de la lumière utilisée, tout en étant aussi proche que possible de celle-ci de façon à accroître la précision. Le tube 26 porte deux ensembles de mesure affectés chacun à l'une des deux directions de mesure $x$ et $y$. L'ensemble affecté à la direction $x$ comprend deux miroirs 14 et 15 portés par le tube 26 à des niveaux différents. Il faut remarquer que le trou 27 de réception du tube est décentré par rapport au passage de lumière qui débouche face au réseau 10, de façon que les faisceaux diffractés se croisent, après réflexion sur les miroirs, en dehors de l'axe du faisceau incident 11. La lame semi-transparente 16 peut ainsi être placée hors du faisceau incident 11. Les détecteurs 17 et 18 sont également portés par le tube 26. Enfin, ce dernier peut porter, par l'intermédiaire de moyens d'ajustage non représentés, un miroir 19 d'autocollimation, qui renvoie le faisceau d'un laser 28 pouvant être à distance.

L'ensemble de mesure suivant la direction $y$ peut avoir la même constitution que celui qui vient d'être décrit. Sur la Figure 3 est seule représentée la lame semi-transparente 16$a$, portée par le même support 29 que la lame 16. Le support 29 sera, comme les miroirs 14 et 15 et les détecteurs 17 et 18, fixé au tube 26.

Lorsqu'on utilise comme source de lumière un laser fournissant un faisceau polarisé, le plan de polarisation sera choisi à 45° des traits du réseau 10. Avec un laser de 2 mW fournissant un faisceau de sortie ayant un diamètre de l'ordre du millimètre, il suffira de miroirs 14 et 15 ayant un diamètre de 12,5 mm, disponibles dans le commerce. La lame semi-transparente pourra avoir un diamètre de l'ordre du centimètre, mais il sera souvent plus commode d'opter pour un diamètre un peu plus élevé pour faciliter son montage.

Les détecteurs pourront être constitués par des phototransistors, au nombre de 4 au total. On pourra notamment utiliser des phototransistors MT2 disponibles en boîtier TO5 et dont la réponse reste satisfaisante jusqu'à une fréquence de comptage de quelques MHz, ce qui ce qui permet de mesurer des déplacements à vitesse élevée.

Les détecteurs doivent être associés à une électronique de comptage qu'il n'est pas nécessaire de décrire ici car elle peut être relativement classique et très similaire à celle prévue en interférométrie laser, mais démunie de moyens de compensation automatique. Cette électronique sera généralement numérique et comportera alors, pour chaque ensemble de mesure, un circuit de mise en forme qui reçoit un signal sinusoïdal provenant du détecteur correspondant et une logique de comptage qui attaque un compteur-décompteur.

L'amplitude des déplacements mesurables est déterminée par les dimensions du réseau 10 : dans la pratique, une dimension de 150 x 150 mm est largement suffisante pour un dispositif destiné à un photorépéteur sur tranche. Le coût du dispositif est alors à peu près le quart de celui d'un interféromètre à laser pour la même application.

Le montage de la figure 3 est susceptible de nombreuses variantes de réalisation faisant notamment appel à différents matériaux pour constituer un bloc similaire à celui de la Figure 1a, mais pour deux directions.

La variante montrée en Figure 4 comporte, comme celle de la Figure 1a, une pièce métallique (aluminium ou alliage léger par exemple) qui, vue en élévation dans deux directions orthogonales, a une forme similaire à celle montrée en Figure 1a. On y retrouve les miroirs 14, 15, 34 (le miroir 35 n'étant pas représenté) et la lame semi-transparente 16 destinés à la mesure dans une des directions. Pour la mesure dans l'autre direction sont prévus des miroirs similaires, parmi lesquels seul le miroir 14a est visible, et une lame 16a.

Miroirs et lames semi-transparentes sont collés par leurs faces actives sur le bloc. Une plaque vissée sur le bloc porte les miroirs de renvoi vers les détecteurs.

Une autre solution, qui exige des traitements de surface et un usinage compliqué, et donc se traduit par un prix de revient élevé et sera en général moins avantageuse, consiste à constituer le bloc d'une pièce de verre usinée dont on métallise les faces devant servir de miroirs.

REVENDICATIONS

1. Procédé optique de mesure du déplacement d'un objet, caractérisé en ce qu'on fait diffracter un faisceau de lumière monochromatique sur un réseau plan (10) porté par l'objet et parallèle à la direction du déplacement, en ce qu'on fait interférer deux faisceaux diffractés (12, 13), avantageusement par réflexion, de même ordre et en ce que l'on compte les extrema d'intensité de lumière au cours du déplacement.

2. Procédé suivant la revendication 1, caractérisé en ce que le réseau (10) est à lignes croisées et en ce qu'on fait interférer les ordres (+1, 0) et (-1, 0) d'une part, les ordres (0, +1) et (0, -1) d'autre part, pour mesurer les déplacements suivant deux directions perpendiculaires.

3. Procédé suivant la revendication 1 ou 2, caractérisé en ce que le faisceau de lumière est fourni par un laser et est polarisé, avant ou après diffraction, suivant un plan différent de celui des traits du réseau, avantageusement à 45°.

4. Dispositif optique de mesure du déplacement d'un objet, caractérisé en ce qu'il comprend une source (28) de lumière fournissant un faisceau parallèle (11) de lumière cohérente monochromatique, un réseau plan (10) porté par l'objet se déplaçant perpendiculairement audit faisceau, des moyens (14, 15) placés sur le trajet de deux faisceaux diffractés, avantageusement par réflexion, de même ordre provenant du réseau pour renvoyer les deux faisceaux vers un système de détection (16) et des moyens (17, 18) permettant de compter les extrema d'intensité de la lumière reçue par le système détecteur lors des déplacements du réseau.

5. Dispositif suivant la revendication 4, caractérisé en ce que les moyens pour renvoyer les deux faisceaux comportent deux réflecteurs situés à des niveaux différents de façon à faire interférer les deux faisceaux dans un plan décalé de celui du faisceau incident (11).

6. Dispositif suivant la revendication 4 ou 5,

JFo/FG
9.3.1982.

caractérisé en ce que le réseau comporte deux jeux de traits croisés et en ce que le dispositif a deux ensembles de mesure associés chacun à l'une de deux directions de déplacement orthogonales.

7. Dispositif suivant l'une quelconque des revendications 4 à 6, caractérisé en ce que le système de détection comporte une surface semi-transparente placée dans le plan de défilement des extrema et des capteurs photosensibles, tels que des phototransistors placés pour recevoir la lumière provenant de la lame.

8. Photorépéteur sur tranche, caractérisé en ce qu'il comprend une table déplaçable suivant deux directions de mesure orthogonales sur un banc (20) dans lequel est ménagé un trou de réception d'un tube portant un dispositif suivant l'une quelconque des revendications 4 à 7, le réseau étant porté par la table (22).

JFo/FG
9.3.1982.

FIG.1.

FIG.2.

## FIG.1a.

0065429

FIG.3.

FIG.4.

**Office européen des brevets**

# RAPPORT DE RECHERCHE EUROPEENNE

Numéro de la demande

EP 82 40 0637

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 361 628  (IBM)  *Figures; revendications* | 1,2,4-7 | G 01 B  9/02  G 01 D  5/28 |
| Y | FR-A-2 454 602  (NRDC)  *Figures; revendications* | 1,2,4-7 | |
| X,Y | WO-A-7 900 433  (REMIJAN)  *Abrégé;  figures; page 27, ligne 28 - page 29 ligne 6* | 1-4,5-7 | |

### DOMAINES TECHNIQUES RECHERCHES (Int. Cl. 3)

G 01 B  9
G 01 D  5

Le présent rapport de recherche a été établi pour toutes les revendications

| Lieu de la recherche | Date d'achèvement de la recherche | Examinateur |
|---|---|---|
| LA HAYE | 30-08-1982 | LLOYD P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82